# EUROPEAN PATENT APPLICATION

(11) **EP 2 141 004 A1**
(43) Date of publication of application: **06.01.2010**
(21) Application number: 08159317.0
(22) Date of filing: 30.06.2008
(51) Int. Cl.: B29C 70/48, B29C 70/54, B29C 33/00, B29L 23/00, B29K 105/06

(54) **One-pieced shaped mould**

(71) Applicant: ABB Technology AG, 8050 Zürich (CH)
(72) Inventor: Pettersson, Joakim, 941 62, Piteå (SE); Johansson, Anders C., 941 48, Piteå (SE)
(74) Representative: Kock, Ina

(57) **Abstract**

A device 1 for manufacturing of hollow elongated, fibre reinforced thermo-set composite parts, comprising an inner mould 15, arranged with a mandrel 3 and a first cavity 16. Further said device 1 comprises at least one pre-form 2 arranged on said mandrel 3, an outer mould 8 arranged with a second cavity 9 and open at both ends surrounding part of said pre-form 2 and at least one heating device. At least one inlet 11 is arranged in order to inject resin into said second cavity 9 and at least one outlet 12 arranged in order to evacuate air from said second cavity 9. Said second cavity 9 is enclosed by homogenous walls 10 undividable along an axis parallel to a long axis of said pre-form 2. Closure devices 13, 14 are arranged at respective said ends of said outer mould 8 for closing purposes.

## Description

### TECHNICAL FIELD

The present invention relates to a device for manufacturing of hollow elongated fibre reinforced thermo-set composite parts, especially manufactured for high voltage applications.

### BACKGROUND ART

The production of tubular shaped composites, such as insulators used in high voltage power applications, requires that high quality of the surface is achieved, in order to avoid the risk of electrical surface breakdown.

A general process used for manufacturing such composite part is Resin Transfer Moulding (RTM), which is a low pressure moulding process, where a mixed resin and catalyst are injected into a closed mould containing a fiber pack or pre-form. After closing and sealing said mould, thermo-set resin is injected through a resin inlet and air is evacuated through an air outlet. The resin impregnates said fibers during mould-fill. Said part is cured in the mould prior to de-moulding. When the resin has cured the mould can be opened and the finished component can be removed. A wide range of resin systems can be used including polyester, vinylester, epoxy, phenolic and methyl methacylates etc, combined with pigments and fillers including aluminium trihydrates and calcium carbonates if required. The fiber pack can be either, glass, carbon, aramid, polyester or a combination of these. There are a large variety of weights and styles commonly available. The resin can be injected by pressure in the inlet or by vacuum at the outlet or a combination of said methods. The mould is typically made in two pieces and divided along its length. As a result the tolerances of the finished part are often not acceptable and this requires grinding of the finished part, especially in order to remove flash, and polishing after the RTM-process in order to obtain good surface quality and correct dimensions. Another disadvantage with a two piece mould is a high tooling cost.

Using one-piece moulds is also known, however the usage is complicated since it is more difficult to load a fibre-pre-form into a one-piece mould compared to a two-piece mould, since the pre-form most likely will deform during loading or moulding, leading to uncontrolled variations in the fibre structure and therefore uncontrolled performance of the finished part. The grade of deformation is depending on several parameters i.e. fibre angles, fibre tension, stacking sequence, friction to mould surface and the thickness of the pre-form.

### SUMMARY OF THE INVENTION

According to a first aspect of the invention a device is provided which substantially improves the surface quality of moulded hollow elongated fibre reinforced thermo-set composite parts, without the need for further surface treatment after moulding. An embodiment of the present invention is to provide a device which facilitates the loading of a fibre pre-form into a mould and thereby reducing the risk of fibre deformation. It is also another embodiment of the present invention to provide a device which reduces the tool costs compared to the tool costs related to the use of two piece outer moulds.

The problems previously mentioned are solved by means of a device of the type defined in the introduction, which is **characterised in that** said second cavity is enclosed by homogenous walls undividable along an axis parallel to a long axis of said mould, said outer mould is open at both ends and that closure devices are arranged at respective said ends of said outer mould for closing purposes.

The invention will improve the performance of moulded objects by a robust placement of fibers in the pre-form, where the fibers are locked in an axial direction when the pre-form is inserted into the outer mould. The concept also allows full flexibility of optimizing the fibre lay-up. Any type of reinforcements i.e. fabrics, surface-veil and rovings can be utilized and mixed in the pre-form and locked in position. The invention also allows to design the pre-form with any type of fibre angles as well as it allows the usage of thick pre-forms that gives fibre contents above 30% by volume in the finished parts. Using a one-piece mould as described above will also reduce the tool costs and eliminate the occurrence of flash at the surface of the finished part and thereby reducing the need for expensive and time consuming surface treatment e.g. grinding, deburring and polishing.

According to another embodiment of the invention a device is provided which safely secures the pre-form in place and makes it impossible for said pre-form to deform in axial direction when said pre-form is loaded in the outer mould.

According to a preferred embodiment of the invention said pre-form is arranged to consist, along a direction of a long axis of the pre-form, a first part and a second part, where the outer diameter of said first part is smaller than the outer diameter of said second part. The difference between the pre-form diameter of said second step and the pre-form diameter of said first step is typically a bevel, radius or a step.

Further said outer mould is arranged to consist a first part and a second part where the inner diameter of said first part is larger than the inner diameter of said second part. The difference between the outer mould diameter of said second step and the outer mould diameter of said first step is typically a bevel, radius or a step. This arrangement will prevent the fibre from sliding in an axial direction during insertion of the pre-form in the outer mould.

According to a further preferred embodiment of the invention said pre-form is arranged to consist of one or more layers of fibre wound on said mandrel.

According to a further preferred embodiment of the invention at least one locking device is arranged around the first part of said pre-form in order to secure said wound layers of fibre to the pre-form. Preferably said locking device consists of tape or a clamping ring. Said locking devices will fasten the fibre against the mandrel and thus eliminating the possibility that the fibre should slide.

In another aspect of the invention a method is provided for carrying out the invention.

This aspect is obtained by means of a method for manufacturing of hollow elongated fibre reinforced thermo-set composite parts using a device comprising an inner mould, arranged with a mandrel and a first cavity. Further said device comprises a pre-form, consisting of a first part and a second part and where the outer diameter of said first part is smaller than the outer diameter of said second part, arranged on said mandrel, and an outer mould, arranged with a second cavity, completely surrounded by homogenous walls undividable along an axis parallel to a long axis of said mould, and open at both ends. At least one inlet is arranged in order to inject resin into said second cavity and at least one outlet is arranged in order to evacuate air from said second cavity. Further a heating device and two closing means are also arranged. Said pre-form is **characterised in that** it is inserted into said outer mould and said closing means are used in order to close, and seal, said outer mould in respective said ends. A resin is injected through said inlet arranged for resin injection into said second cavity, air is evacuated from said second cavity through said outlet arranged for air evacuation and heat is applied into said second cavity by means of said heating device. Said heating device is preferably of the electrical type.

According to a preferred embodiment the method is especially adapted for resin transfer moulding.

According to a further preferred embodiment of the method at least one locking device is arranged around the first part, preferably the tip section, of the pre-form, in order to secure the fastening of the fibre to the mandrel and eliminate the risk that the fibre should slide in an axial direction.

### BRIEF DESCRIPTION OF THE DRAWINGS

The present invention will be described in more detail in connection with the enclosed schematic drawings.

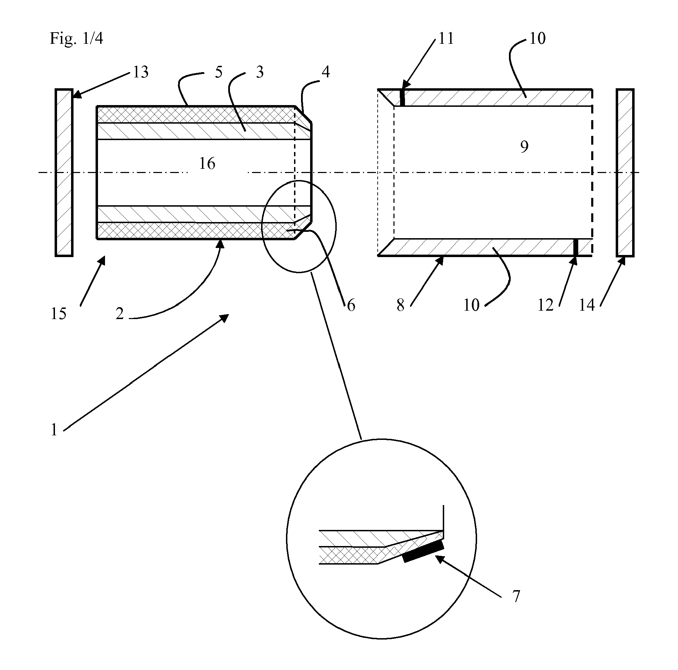

Figure 1 shows a schematic cross section view of a device, where the different parts are separated from each other, for manufacturing of hollow elongated, fibre reinforced thermo-set composite parts. Also shown is the locking device arranged around the first part of said pre-form in order to secure said wound layers of fibre to the pre-form.

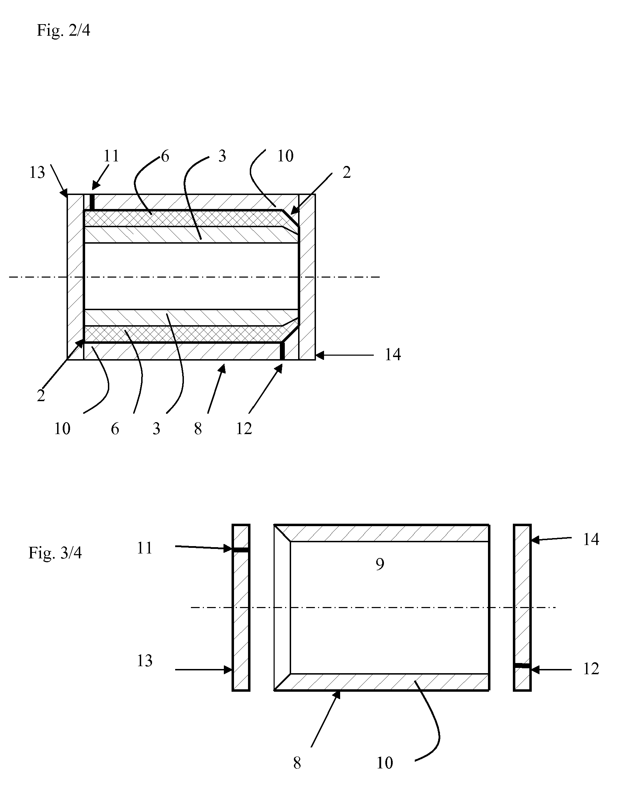

Figure 2 shows a schematic cross section view of an assembled device for manufacturing of hollow elongated, fibre reinforced thermo-set composite parts.
Figure 3 shows a schematic cross section view of a device for manufacturing of hollow elongated, fibre reinforced thermo-set composite parts, where the inlet arranged in order to inject resin is arranged on one end-piece and the outlet arranged in order to evacuate air is arranged on the opposite end-piece.

### DETAILED DESCRIPTIONS OF PREFERRED EMBODIMENTS

Figures 1 shows a device for manufacturing of hollow elongated, fibre reinforced thermo-set composite parts, such for example tubular shaped composite-products used in high voltage applications.
The device comprises an inner mould 15, arranged with a mandrel 3 and a first cavity 16. Further said device 1 comprises a fibre pre-form 2 arranged on said mandrel 3. Said pre-form 2 consists of a first part 4 and a second part 5 along a direction of a long axis of the pre-form 2, where the diameter of said first part 4 is smaller than the diameter of said second part 5. Further said pre-form 2 consists of one or more layers 6 of fibre wound around said mandrel 3. At least one locking device 7 is arranged around the fibres 6 wound around the first part 4 of said pre-form 2, in order to secure said wound layers of fibre 6 from deformation in the axial direction. Said locking device 7 consists of a clamp ring, stiff tape or thread with high tension, arranged in a tangential direction around the first part 4 of said pre-form 2. The device also comprises an outer mould 8, arranged with a second cavity 9, open at both ends. Said second cavity 9 is enclosed by homogenous walls 10 undividable along an axis parallel to a long axis of said outer mould 8. Said outer mould 8 is also arranged with at least one inlet 11 arranged for resin injection and at least one outlet 12 arranged for evacuation of air. For heat treatment and quenching of said wound layers of fibre 6 forming said composite parts, said outer mould 8 is arranged with at least one heating element ( not shown ), preferably of the electrical type. For closing purposes detachable closure devices 13, 14 are arranged at respective said ends of said outer mould 8.

Said pre-form 2 is inserted into the outer mould 8 which thereafter is closed at both ends by means of said detachable closure devices 13, 14. Resin is injected through said inlet 11 arranged for resin injection and air is evacuated through said outlet 12 for air evacuation, thereafter heat is applied to the pre-form 2 by means of said heating device. After said heating process said closure devices are being taken apart from the mould and the finished product can be extracted.

Figure 2 shows the inner mould 15 and the outer mold 8 assembled with the pre-form 2 and closed at both ends by means of said detachable closure devices 13, 14.

Figure 3 shows essentially the same outer mould 8 as described in figure 1 and 2, with the difference in that said inlet 11 arranged for resin injection arranged on one end-piece and that said outlet 12 arranged for evacuating air is arranged on said opposite end-piece.

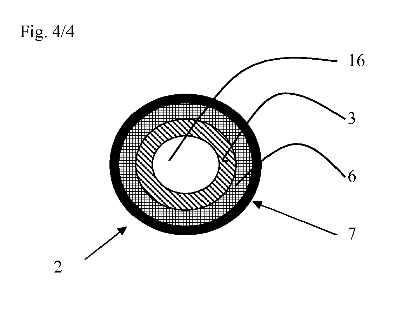

Figure 4 shows a cross-section of said pre-form 2 with a locking device 7 arranged around the fibres 6 wound around the first part 4 of said pre-form 2.

## Claims

1. A device (1) for manufacturing of hollow elongated, fibre reinforced thermo-set composite parts, comprising at least:
an inner mould (15), arranged with a mandrel (3) and a first cavity (16),
one pre-form (2), arranged on said mandrel (3),
an outer mould (8), arranged with a second cavity (9), open at both ends,
surrounding part of said pre-form (2),
at least one inlet (11) arranged in order to inject resin into said second cavity (9), and at least one outlet (12) arranged in order to evacuate air from said second cavity (9), said outer mould (8) is also being arranged with at least one heating device
**CHARACTERISED in that**
said second cavity (9) is enclosed by homogenous walls (10) undividable
along an axis parallel to a long axis of said pre-form (2),
said outer mould (8) is open at both ends and
that closure devices (13, 14) are arranged at respective said ends of said
outer mould (8) for closing purposes.

2. A device according to claim 1 **CHARACTERISED in that** said pre-form (2) consists of a first part (4) and a second part (5) along a direction of a long axis of the pre-form (2) and where the outer diameter of said first part (4) is smaller than the outer diameter of said second part (5).

3. A device according to claim 1 **CHARACTERISED in that** said outer mould (8) consists of a first part (4) and a second part (5) along a direction of a long axis of the pre-form (2) and where the inner diameter of said first part (4) is larger than the inner diameter of said second part (5).

4. A device according to claim 1 **CHARACTERISED in that** said pre-form (2) consists of one or more layers (6) of fibre wound on said mandrel (3).

5. A device according to claim 1 - 4 **CHARACTERISED in that** at least one locking device (7) is arranged around the first part (4) of said pre-form (2) in order to secure said wound layers (6) of fibre to the pre-form (2).

6. A device according to claim 5 **CHARACTERISED in that** said locking device (7) is made up of tape.

7. A device according to claim 5 **CHARACTERISED in that** said locking device (7) is made of thread.

8. A device according to claim 5 **CHARACTERISED in that** said locking device (7) is made up of at least one clamp ring.

9. A device according to any of the preceding claims **CHARACTERISED in that** said inlet (11) arranged in order to inject resin into said second cavity (9) is arranged in one closure device (13) arranged at said outer mould (8) and that said outlet (12) arranged in order to evacuate air from said second cavity (9) is arranged in the opposite closure device (14) arranged at said outer mould (8).

10. A device according to any of the preceding claims **CHARACTERISED in that** said inlet (11) arranged in order to inject resin into said second cavity (9) is arranged in one end of said outer mould (8) and that said outlet (12) arranged in order to evacuate air from said second cavity (9) is arranged in the opposite end of said outer mould (8).

11. A method for manufacturing of hollow elongated fibre reinforced thermo-set composite parts using:
an inner mould (15), arranged with a mandrel (3) and a first cavity (16),
a pre-form (2), consisting of a first part (4) and a second part (5) along a direction of a long axis of a pre-form (2) and where the outer diameter of said first part (4) is smaller than the outer diameter of said second part (5), arranged on a mandrel (3), and an outer mould (8), arranged with a second cavity (9), surrounded by homogenous walls (19) undividable along an axis parallel to a long axis of said outer mould (8), and open at both ends, comprising at least:
- one inlet (11) arranged in order to inject resin into said second cavity (9),
- one outlet (12) arranged in order to evacuate air from said second cavity (9),
- one heating device and
- two closing means (13, 14)
**CHARACTERISED in that:**
- said pre-form (2) is inserted into said outer mould (8),
- said closing means (13,14) are used in order to close, and seal,
said outer mould (8) at respective said ends,
- a resin is injected through said inlet (11) arranged for resin injection into
said
second cavity (9),
- air is evacuated from said second cavity (9) through said outlet (12) arranged for air evacuation and
- heat is applied into second said (9) cavity by means of said heating device.

12. A method according to claim 11 **CHARACTERISED in that** it is adapted for Resin Transfer Moulding (RTM).

13. A method according to claim 11 or 12 **CHARACTERISED in that** at least one locking device (7), made of stiff tape or thread with high tension, is arranged in a tangential direction around the first part (4) of said pre-form (2).

14. A method according to claim 13 **CHARACTERISED in that** at least one clamp ring is arranged in a tangential direction around the first part (4) of said pre-form (2).
